# EUROPÄISCHE PATENTANMELDUNG

(11) **EP 2 233 414 A1**
(43) Veröffentlichungstag der Anmeldung: **29.09.2010**
(21) Anmeldenummer: 10157154.5
(22) Anmeldetag: 22.03.2010
(51) Int. Cl.: B65G 51/24

(54) **Weiche für eine Rohrpostanlage sowie Rohrpostanlage**

(30) Priorität: 27.03.2009 AT 1892009 U
(71) Anmelder: Ing. Sumetzberger GmbH, 1110 Wien (AT)
(72) Erfinder: Friedrich, Peter, Ing., 1040 Wien (AT)
(74) Vertreter: Müllner, Martin

(57) **Zusammenfassung**

Die Rohrpostweiche (19) weist zwei Stirnplatten (1, 2) auf, an die einerseits ein erster Stutzen (3) und andererseits ein zweiter (4) sowie ein dritter Stutzen (5) angeschlossen sind. Es ist Mittelteil (7) vorgesehen, der einen geraden (13) und einen gekrümmt verlaufenden Rohrabschnitt (14) sowie eine starre Verbindung der beiden Rohrabschnitte (13, 14) aufweist, die selektiv an die Stutzen (3 und 4 bzw. 3 und 5) anschließbar sind. Der gekrümmt verlaufende Rohrabschnitt (14) weist lediglich eine einfache kreisbogenabschnittsförmige Krümmung auf, und der Stutzen (5) der Weiche (19) verläuft daher schiefwinkelig zum gerade verlaufenden Rohrabschnitt (13). Erfindungsgemäß weist der Mittelteil (7) mit einem Mantel (15) dicht verbundene und gegen die Stirnplatten (1, 2) der Weiche (19) abgedichtete Mittelteil-Stirnplatten (8, 9) auf, in denen die Rohrabschnitte (13, 14) der Weiche (19) dicht gehalten sind. Um auch in Abzweigstellung einen geschlossenen Luftstrom aufrecht zu halten, weist die Stirnplatte (9) mindestens einen Durchbruch (12) und der gekrümmt verlaufende Rohrabschnitt (14) Lüftungsbohrungen (17) auf. Vorzugsweise ist der Mittelteil (7) ein Drehteil und ist der Querschnitt des Stutzens (5) und des an diesen angeschlossenen Abzweigrohrs (18) vergrößert.

## Beschreibung

### Beschreibung

### Weiche für eine Rohrpostanlage sowie Rohrpostanlage Technisches Gebiet

Die Erfindung betrifft eine Weiche für eine Rohrpostanlage gemäß dem Oberbegriff des Anspruchs 1 sowie eine Rohrpostanlage mit solch einer Weiche.

### Stand der Technik

Rohrpostanlagen weisen normalerweise eine Vielzahl von Rohrpoststationen auf. Damit diese selektiv angefahren werden können, sind im Verlauf eines Fahrrohres angeordnete Weichen erforderlich.

Aus der Praxis sind bereits Rohrpostweichen bekannt, deren Aufbau wie folgt ist: Die Rohrpostweichen werden im Allgemeinen mit einem Gehäuse ausgeführt, an dessen einer Stirnseite ein erster ortsfester Rohrleitungsanschluss und an dessen entgegensetzter anderen Stirnseite wenigstens zwei zweite ortsfeste Rohrleitungsanschlüsse angebracht sind. Innerhalb des Gehäuses befindet sich ein einzelner, schwenkbar gelagerter Weichenrohrabschnitt, der aus einem S-förmig gebogenen Rohrstück, oft auch als Etagenbogen bezeichnet, besteht, welches Rohrstück an einem Ende mit dem ersten Rohrleitungsanschluss drehbar verbunden ist und dessen zweites Ende durch einen entsprechenden Schwenkmechanismus wahlweise zwischen den zweiten Rohrleitungsanschlüssen verstellt werden kann. Aus diesem Aufbau lässt sich erkennen, dass zwar alle Rohrleitungsanschlüsse parallel zueinander sind, dass aber der erste ortsfeste Rohrleitungsanschluss weder mit dem zweiten noch mit dem dritten ortsfesten Rohrleitungsanschluss fluchtet, da sich durch den Etagenbogen ein gewisser Versatz der Rohrleitungsanschlüsse zueinander ergibt. Bei dieser Art Rohrpostweiche ergeben sich durch die Etagenbögen große Geräteabmessungen in Abhängigkeit der Rohrposthülsenlänge in Zusammenhang mit dem notwendigen minimalen Bogenradius. Bei der Verwendung von kleinen Bogenradien ist nur der Transport von kurzen Rohrposthülsen möglich. Für den Transport von langen Rohrposthülsen benötigt man wiederum große Bogenradien, welche wiederum große Geräteabmessungen ergeben. Da bei der Projektierung und Montage von Rohrpostanlagen vorgegebene Leitungswege und Platzvorgaben für Weichen und Stationen zu berücksichtigen sind, sind Platz sparende Rohrpostweichen von Vorteil.

Ferner sind Rohrpostweichen bekannt, die in Form von Y-förmigen Einheiten aufgebaut sind. Bei diesen Rohrpostweichen wird ein ortsfester Rohrleitungsanschluss dauerhaft mit zwei gegenüberliegenden, ebenfalls ortsfesten Rohrleitungsanschlüssen bzw. Austrittsöffnungen verbunden. Eine Austrittsöffnung der Ypsilonweiche ist koaxial und parallel zur Eintrittsöffnung, und die zweite Austrittsöffnung liegt auf einer Kreisbahn mit definiertem Bogenradius, welche Kreisbahn glatt in die Achse der Eintrittsöffnung übergeht. Die Umlenkung der Rohrposthülse in derart konzipierten Rohrpostweichen erfolgt durch mechanische Umlenkung der Rohrposthülse durch eigens angesteuerte Hebel oder Klappen. Die mechanische Umlenkung der Rohrposthülsen ist mit einer starken Geräuschentwicklung und hohem Verschleiß der Rohrposthülsen verbunden.

Aus der gattungsbildenden DE 2407694 A sind weiters Rohrpostweichen bekannt, bei deren Einsatz man vom integralen Bestandteil einer Rohrpoststation, die an das Abzweigrohr angeschlossen ist, ausgeht. Diese Rohrpostweichen sind so konzipiert, dass sich zwischen einem Hauptstutzen und zwei gegenüberliegenden Verzweigungsstutzen eines Gehäuses ein drehbar gelagerter Träger befindet. Auf diesem Träger sind ein geradliniges Leitrohr und ein gebogenes Leitrohr angebracht. Die Leitrohre sind im Träger so angeordnet, dass die Drehachse des Trägers und die Achsen der Leitrohre in einer Ebene liegen. Durch Drehen des Trägers kann entweder das geradlinige Leitrohr das Eingangsrohr mit einem der Ausgangsrohre verbinden oder das gebogene Leitrohr das Eingangsrohr mit dem anderen Ausgangsrohr (dem Abzweigrohr) verbinden.

Bei dieser Art von Rohrpostweichen werden die Leitrohre zu den Hauptstutzen und Verzweigungsstutzen nicht luftdicht verbunden, sondern mit einem Luftspalt positioniert. Dies ist bei Geradeausstellung ungünstig, weil dies kurzzeitig (während die Rohrposthülse die Weiche passiert) zu einer Verringerung der Antriebskraft führt.

In Abzweigstellung wird die Rohrposthülse abgebremst, weil die Luft im Spalt zwischen dem gekrümmten Leitrohr und dem gekrümmten Verzweigungsstutzen ausströmt, also keine Kraft mehr auf die Rohrposthülse wirkt, und weil das an den gekrümmten Verzweigungsstutzen angeschlossene Fahrrohr (das Abzweigrohr) luftdicht verschlossen ist. Damit baut sich vor der Rohrposthülse ein Luftpolster auf, der diese abbremst. Während die Rohrposthülse entnommen wird, ist natürlich kein luftdichter Abschluss möglich, es sei denn, man baut einen zusätzlichen Absperrschieber ein. Will man dies vermeiden, so muss man während der Entnahme der Rohrposthülse Fehlluft in Kauf nehmen, da das Abzweigrohr in beiden Stellungen der Weiche mit dem Hauptrohr kommuniziert.

### Darstellung der Erfindung

Ziel der Erfindung ist es, eine Rohrpostweiche vorzuschlagen, sodass es möglich ist, eine Vielzahl von Rohrpoststationen zu versorgen und diese sehr kompakt anzuordnen, wenn diese Art von Rohrpostweiche in entsprechender Anzahl in eine Rohrpostanlage eingebaut wird. Dabei soll ein geschlossener Luftstrom gewährleistet sein.

Erfindungsgemäß wird dieses Ziel bei einer Rohrpostweiche der eingangs erwähnten Art durch die kennzeichnenden Merkmale des Anspruchs 1 erreicht.

Auf diese Weise wird in beiden Stellungen des Mittelteils eine durchgehende Luftströmung ermöglicht. In der Durchfahrtsstellung ist der Hauptstutzen mit dem koaxial gegenüberliegenden Verzweigungsstutzen verbunden, hier ist die durchgehende Luftströmung automatisch gegeben. Dabei ist der Abzweigstutzen gegenüber dem Hauptstutzen abgedichtet. In der Abzweigstellung kann die Luft aus den radialen Lüftungsbohrungen des gekrümmt verlaufenden Rohrabschnitts in den (dichten) Mittelteil austreten und durch den Durchbruch in der Mittelteil-Stirnplatte in den koaxial dem Hauptstutzen gegenüberliegenden Verzweigungsstutzen strömen. Es wird dabei angenommen, dass das Abzweigrohr luftdicht verschlossen ist, während die Weiche in Abzweigstellung steht, sodass durch das Abzweigrohr keine Luft entweicht.

Durch die luftdichte Verbindung des bogenförmigen Rohrabschnittes mit dem Stutzen zum Anschluss des Abzweigrohres wird ermöglicht, dass das Gebläse für den Druck bzw. den Unterdruck in der Rohrpostanlage in beiden Richtungen (also Saug- und Druckbetrieb) und an beiden Seiten (also Hauptstutzen und Verzweigungsstutzen) angebracht werden kann und immer ein einwandfreier Zweirichtungsbetrieb der Rohrposthülse gewährleistet ist.

Besonders kompakte Abmessungen quer zur Richtung des Hauptrohres ergeben sich durch die Merkmale des Anspruchs 2, also durch die Ausbildung der Weiche mit einer drehbaren Trommel.

Problematisch kann bei dieser Weiche sein, dass die Hülse - wenn sie dicht am Rohr anliegt - in der Abzweigstellung der Weiche zu stark gebremst wird, d.h. sie bleibt im Rohr stecken und erreicht die angeschlossene Rohrpoststation nicht. Dies lässt sich zwar verhindern, indem man das Abzweigrohr nicht ganz luftdicht abschließt, jedoch hat man dann keinen geschlossenen Luftstrom mehr, mit all den damit verbundenen Nachteilen (Geräuschentwicklung, Zugluft, Energieverlust).

Um dies zu vermeiden, kann man die Merkmale der Ansprüche 3 und/oder 4 vorsehen.

Der größere Querschnitt hat zwei Vorteile. Einerseits verhindert er, dass eine ankommende Rohrposthülse wegen des dichten Abschlusses des Abzweigrohrs stecken bleibt: Durch die vorgesehenen Merkmale ergibt sich im Bereich des Stutzens bzw. des Abzweigrohrs ein größerer Querschnitt als im Fahrrohr, wodurch nach Eintritt der Rohrposthülse in den abfallenden Bereich des Stutzens bzw. des Abzweigrohres die Rohrposthülse umströmt werden kann, sodass diese auch bei an seinem freien Ende abgeschlossenem Abzweigrohr aufgrund der Schwerkraft nach unten fallen kann, wobei der Fall durch die um die Rohrposthülse umströmende Luft gebremst wird. Das Abzweigrohr kann somit (außer zur Entnahme einer Rohrposthülse) geschlossen gehalten werden, wodurch Luftverluste vermieden werden, sodass Energie gespart werden kann. Während der Entnahme einer Rohrposthülse soll die Weiche auf "Gerade" stehen, sodass auch in dieser Zeit der Luftstrom geschlossen ist.

Weiters ermöglicht der vorgeschlagene Querschnitt des zum Anschluss eines Abzweigrohres vorgesehenen Stutzens bzw. des daran angeschlossenen Abzweigrohrs, dass dieser bzw. dieses einen relativ kleinen Krümmungsradius aufweisen kann und damit die gesamte Baulänge einer Abzweigung kurz gehalten werden kann. Der vergrößerte Querschnitt soll nur so groß gewählt werden, dass einerseits ein optimales Bremsen auf der Luftsäule, aber auch das Wegsaugen einer im größeren Rohrquerschnitt befindlichen Rohrposthülse zuverlässig gewährleistet ist.

Aus diesem Grunde ist es zweckmäßig, die Merkmale des Anspruchs 5 vorzusehen, also den Querschnitt nur in einer Dimension (nämlich in der Richtung, die für die Kurvengängigkeit maßgeblich ist) zu vergrößern.

Die Merkmale der Ansprüche 3-5 lassen sich auch bei einer Weiche gemäß der DE 2407694 A mit den gleichen Vorteilen anwenden wie bei der erfindungsgemäßen Weiche.

### Kurze Beschreibung der Abbildungen der Zeichnungen

Ein Ausführungsbeispiel der Erfindung ist in den Zeichnungen dargestellt und wird in der nachfolgenden Beschreibung näher erläutert. Dabei zeigt:

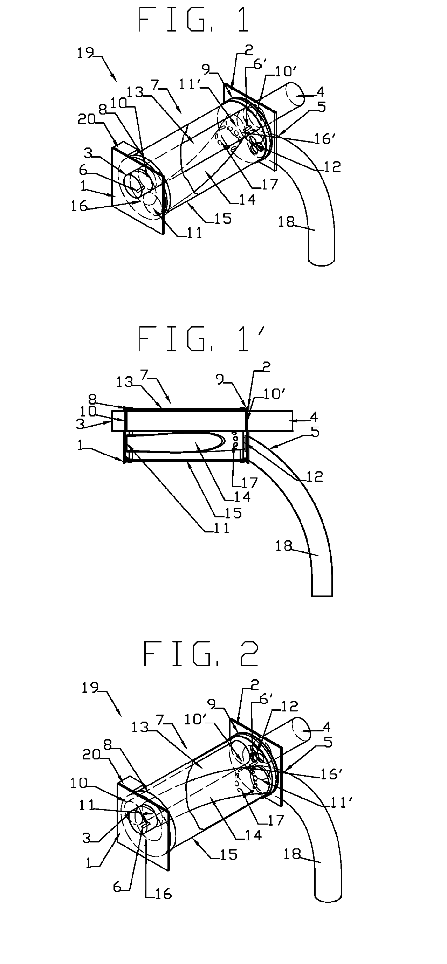

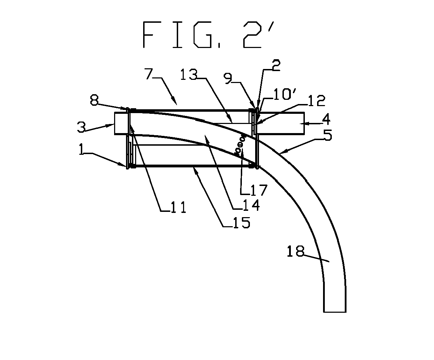

Fig. 1 eine perspektivische Darstellung der Rohrpostweiche in Verwendung als integraler Bestandteil einer Rohrpoststation in Durchfahrtsstellung; Fig. 1' eine Schnittdarstellung der Weiche nach Fig. 1; Fig. 2 die Rohrpostweiche gemäß Fig. 1, jedoch in Abzweigstellung; und Fig. 2'eine Schnittdarstellung der Weiche in der Abzweigstellung gemäß Fig. 2.

### Bester Weg zur Ausführung der Erfindung

Die in Fig. 1 dargestellte Rohrpostweiche 19 weist eine Stirnplatte 1 mit einem Stutzen 3 für den Anschluss eines ankommenden Fahrrohrabschnittes (Hauptstutzen 3) und eine gegenüberliegende Stirnplatte 2 mit zwei Stutzen 4, 5 für den Anschluss eines abgehenden Fahrrohrabschnittes und eines Abzweigrohres 18 auf, das zu einer Rohrpoststation führt. Zwischen den beiden Stirnplatten 1, 2 befindet sich ein Mittelteil 7, der um eine Drehachse 6, 6' drehbar gelagert ist und im Folgenden daher als Drehteil 7 bezeichnet wird. Die Drehachse 6, 6' verläuft parallel zur Achse der miteinander fluchtenden Stutzen 3, 4. Dieser Drehteil 7 weist eine der Stirnplatte 1 der Weiche 19 zugeordnete Mittelteil-Stirnplatte 8, eine der Stirnplatte 2 der Weiche 19 zugeordnete Mittelteil-Stirnplatte 9, einen geraden Rohrabschnitt 13, einen eine Krümmung aufweisenden Rohrabschnitt 14 und einen die Rohrabschnitte 13, 14 luftdicht umschließenden Mantel 15 auf. Dabei sind die Mittelteil-Stirnplatten 8, 9 gegen die Stirnplatten 1, 2 der Weiche 19 abgedichtet. Der gerade verlaufende Rohrabschnitt 13 verläuft parallel zur gemeinsamen Drehachse 6, 6' und verbindet die beiden Mittelteil-Stirnplatten 8, 9 bzw. die in diese eingearbeiteten Löcher 10, 10'. Der gerade Rohrabschnitt 13 hat den gleichen Rohrdurchmesser bzw. Querschnitt wie die Stutzen 3 und 4 und verbindet diese zur Durchfahrtsposition. Der gekrümmt verlaufende Rohrabschnitt 14 verbindet die beiden Mittelteil-Stirnplatten 8, 9 bzw. die in diese eingearbeiteten Löcher 11, 11', wobei sich die Löcher 10, 11 der Mittelteil-Stirnplatte 8 sowie der Stutzen 3 auf einer gemeinsamen Kreisbahn 16 mit dem Mittelpunkt auf der Drehachse 6 befinden und so zwischen Durchfahrtsstellung und Ablenkstellung gewechselt werden kann. Das Loch 10' (und auch die weiter unten erläuterten Durchbrüche 12) sowie der Stutzen 4 befinden sich auf einer Kreisbahn 16' mit gleichem Durchmesser wie die Kreisbahn 16 und gleicher Drehachse 6', jedoch liegt das Loch 11' des bogenförmigen Rohrabschnittes 14 und somit der Stutzen 5 nicht zwingend auf der gleichen Kreisbahn 16', da die Lage des Loches 11' vom Bogenversatz abhängt. Der Mantel 15 verbindet die beiden Mittelteil-Stirnplatten 8, 9 luftdicht und umschließt somit die Rohrabschnitte 13, 14. Im bogenförmigen Rohrabschnitt 14 sind an dem der Mittelteil-Stirnplatte 9 bzw. dem Stutzen 5 zum Anschluss des Abzweigrohres 18 näheren Endes Lüftungsbohrungen 17 angebracht, die sich im Wesentlichen auf einer Umfangslinie des Rohrabschnittes 14 befinden und in Verbindung mit Durchbrüchen 12 einen Bypass bilden. Diese Durchbrüche 12 in der Mittelteil-Stirnplatte 9 befinden sich bei in Abzweigstellung (Fig. 2, 2') befindlicher Weiche 19 im Bereich des Stutzens 4, an dem ein von der Weiche abgehender Abschnitt des Fahrrohres angeschlossen ist.

Der Rohrquerschnitt des bogenförmigen Rohrabschnittes 14 und der Stutzen 5 haben einen größeren Durchmesser als der Rohrquerschnitt des geraden Rohrabschnittes 13 und der beiden Stutzen 3, 4. Am Stutzen 5 ist über das Abzweigrohr 18 eine Rohrpoststation angeschlossen.

In Fig. 2 ist die Weiche 19 nach den Fig. 1, 1' in Abzweigposition dargestellt. Um eine nicht dargestellte Rohrposthülse in die an den Stutzen 5 über das Abzweigrohr 18 angeschlossene Rohrpoststation umzulenken, wird der Drehteil 7 durch einen Antrieb 20 in Abzweigstellung bewegt. In dieser Position wird der Stutzen 3, an den der ankommende Abschnitt eines Fahrrohres angeschlossen ist, durch den gekrümmt verlaufenden Rohrabschnitt 14 mit vergrößertem Rohrdurchmesser mit dem abgehenden bogenförmigen Stutzen 5 luftdicht verbunden. An den Stutzen 5 ist eine mit einer Bremsstrecke versehene Rohrpoststation über das Abzweigrohr 18 luftdicht angeschlossen. Wird eine Rohrposthülse in diese Rohrpost- bzw. Entnahmestation umgeleitet, wird diese durch den im Abzweigrohr 18 vorhandenen Luftpolster abgebremst, und die beim Bremsen verdrängte Luft kann nach dem Umströmen der Rohrposthülse durch die im gekrümmt verlaufenden Rohrabschnitt 14 befindlichen radialen Lüftungsbohrungen 17 austreten und durch die Durchbrüche 12 der Mittelteil-Stirnplatte 9, die in dieser Position mit dem Stutzen 4 fluchten, in die Anlage umgelenkt werden. Dadurch kommt es zu einer nur geringen Lärmentwicklung und es ist eine weitgehende Dichtheit des Systems gegeben, wodurch ein Verschleppen von Keimen verhindert wird.

Nach dem Eintreffen der Rohrposthülse in der Rohrpoststation fährt der Drehteil 7 wieder auf Durchfahrtsposition, d.h. der gerade Rohrabschnitt 13 verbindet den Stutzen 3 mit dem Stutzen 4, an denen Abschnitte des Fahrrohres angeschlossen sind. Die Rohrposthülse wird aus der Rohrpoststation ausgeschleust.

Da der gekrümmte Rohrabschnitt 14 nur eine Krümmung in einer Richtung aufweist, ergibt sich eine nur geringe Baulänge der Weiche 19, wobei solche Weichen auch in bestehende Rohrpostanlagen eingebaut werden können.

Um einen besonders kompakten Aufbau der Anlage und kleine Krümmungsradien des Stutzens 5 bzw. des Abzweigrohres 18 zu ermöglichen, kann dieser bzw. dieses z.B. einen rechteckigen oder ellipsenförmigen Querschnitt aufweisen, wobei die längere Achse des Querschnitts radial zum Mittelpunkt der Krümmung verläuft und die kürzere Achse senkrecht hiezu. Dabei kann sich der Querschnitt des Stutzens 5 bzw. des Abzweigrohrs 18 in Richtung zur Rohrpoststation hin der Kreisform mehr und mehr annähern.

## Patentansprüche

1. Rohrpostweiche (19), die eine erste und eine zweite Stirnplatte (1, 2) aufweist, die im Wesentlichen zueinander parallel sind, wobei an die erste Stirnplatte (1) von außen ein erster, mit einem ersten Fahrrohrabschnitt verbindbarer Stutzen (3) angeschlossen ist und an die zweite Stirnplatte (2) von außen ein zweiter, mit einem zweiten Fahrrohrabschnitt verbindbarer Stutzen (4) sowie ein dritter, mit einem Abzweigrohr (18) verbindbarer Stutzen (5) angeschlossen ist und ein Mittelteil (7) vorgesehen ist, der einen ersten, geraden Rohrabschnitt (13), einen zweiten, gekrümmt verlaufenden Rohrabschnitt (14) sowie eine starre Verbindung der beiden Rohrabschnitte (13, 14) aufweist, die mittels Drehung oder Verschiebung des Mittelteils (7) selektiv an die Stutzen (3 und 4 bzw. 3 und 5) anschließbar sind, wobei weiters der gekrümmt verlaufende Rohrabschnitt (14) lediglich eine einfache kreisbogenabschnittsförmige Krümmung aufweist und der zum Anschluss des Abzweigrohres (18) dienende Stutzen (5) der Weiche (19) die Krümmung des gekrümmt verlaufenden Rohrabschnittes (14) der Weiche (19) im Wesentlichen fortsetzt, also schiefwinkelig zum gerade verlaufenden Rohrabschnitt (13) verläuft, **dadurch gekennzeichnet, dass** der Mittelteil (7) mit einem Mantel (15) dicht verbundene und gegen die Stirnplatten (1, 2) der Weiche (19) abgedichtete Mittelteil-Stirnplatten (8, 9) aufweist, in denen die Rohrabschnitte (13, 14) der Weiche (19) dicht gehalten sind, dass die dem gekrümmt verlaufenden Stutzen (5) zugekehrte Mittelteil-Stirnplatte (9) mindestens einen Durchbruch (12) aufweist, der sich bei fluchtender Stellung des gekrümmt verlaufenden Rohrabschnittes (14) der Weiche (19) mit dem gekrümmt verlaufenden Stutzen (5) im Bereich des geraden Stutzens (4) des Fahrrohrabschnittes befindet und dass der gekrümmt verlaufende Rohrabschnitt (14) in seinem dem gekrümmt verlaufenden Stutzen (5) nahen Bereich mit radialen Lüftungsbohrungen (17) versehen ist, die vorzugsweise entlang einer Umfangslinie des Rohrabschnittes (14) angeordnet sind.

2. Rohrpostweiche nach Anspruch 1, **dadurch gekennzeichnet, dass** der Mittelteil (7) als Drehteil ausgebildet ist und dass die Mittelteil-Stirnplatten Kreisscheiben sind, die um eine Achse (6, 6') drehbar sind.

3. Rohrpostweiche nach Anspruch 1 oder 2, **dadurch gekennzeichnet, dass** der gekrümmt verlaufende Stutzen (5) und gegebenenfalls der gekrümmt verlaufende Rohrabschnitt (14) einen größeren Querschnitt aufweist als die übrigen Rohre.

4. Rohrpostanlage mit mindestens einer Weiche nach den Ansprüchen 1-3,
**dadurch gekennzeichnet, dass** das an die Weiche angeschlossene Abzweigrohr (18) abschließbar ist und dass das Abzweigrohr (18) zumindest im Bereich der Weiche einen größeren Querschnitt aufweist als die übrigen Rohre.

5. Rohrpostanlage nach Anspruch 3 und/oder 4, **dadurch gekennzeichnet, dass** im Bereich der Weiche die Achse des Querschnitts des Abzweigrohrs bzw. des gekrümmt verlaufenden Rohrabschnitts (14) bzw. des gekrümmt verlaufenden Stutzens (5) in Richtung zum Krümmungsmittelpunkt hin größer als die senkrecht hiezu verlaufende Achse des Querschnitts ist.
